Europäisches Patentamt

European Patent Office

Office européen des brevets

(11) Publication number: **0 116 813**
A1

# EUROPEAN PATENT APPLICATION

(21) Application number: 83830142.2

(51) Int. Cl.³: **C 08 L 27/06**

(22) Date of filing: 11.07.83

(30) Priority: 25.01.83 IT 1926883

(43) Date of publication of application:
29.08.84 Bulletin 84/35

(84) Designated Contracting States:
AT BE CH DE FR GB LI NL

(71) Applicant: S.C.O.R. S.a.S. di Roncati e Corà
Via Talizia, 26
I-21100 Varese(IT)

(72) Inventor: Crespi, Umberto
Gornate Olona
F-21040 Varese(IT)

(74) Representative: Cicogna, Franco
Ufficio Internazionale Brevetti Dott.Prof. Franco Cicogna
Via Visconti di Modrone, 14/A
I-20122 Milano(IT)

(54) A plasticized and/or non-plasticized, non-toxic and/or toxic P.V.C. compound with no emissions of corrosive and/or non-corrosive fumes in the course of transformation processes.

(57) This invention relates to PVC compounds useful in any processing steps giving rise to the emission of fumes from degredation, evaporation, sublimation, and reaction of the additives, plasticizers, stabilizers, and to the evaporation of water either where included as moisture or released by reaction.

More specifically, this invention relates to a PVC compound formulation effective to avoid fume release from the resulting mixtures while being processed for transformation purposes.

Processing as above, which would involve temperatures of 220°C above, may encompass, by way of example, rotational molding, slush molding, fluidized bed plasticizing, spraying -- including electrostatic spraying -- and sintering.

EP 0 116 813 A1

This invention relates to a plasticized and/or non-plasticized, non-toxic and/or toxic PVC compound with no emissions of corrosive and/or non-corrosive fumes in the course of transformation processes.

As is known, in view of the importance of PVC, its propensity to release volatile matter and degrade has long been the subject for extensive scientific investigation directed to provide the foundations for a more specific research work on the stabilizer action, and accordingly, for optimizing the technologies of stabilization.

While on the one hand, the influence of structural anomalies on PVC degradation seems to be a substantially ascertained fact, on the other hand, it should be recognized that a role is also played by the impurities contained in the resin, where the polymer is not purified, and more generally by the additives admixed to the polymer.

Also known is the influence born on the stability of PVC compounds by the additives used in transformation processes, with the obvious exception of the class of stabilizers.

In this respect, it has been found that, while by dissolving the PVC in some solvents, dehydrochlorination is made faster, with other solvents, it remains unmodified, or is only marginally modified, with respect to the mass conditions. The latter solvents include common plasticizers.

Other compounds which have been investigated in a fairly systematic way are metal chlorides generated by the stabilizers as a result of their reaction while degrading.

It has been found that barium and lead have little or no influence, whereas zinc, cadmium and tin chloride, in common with iron chloride, produce a considerable increase of the dehydrochlorination rate.

As for the causes of the action of chloridric acid, its polar character is adduced, which promotes polarization of the C-Cl and C-H bonds to encourage their breaking, and hence, the separation of HCl in accordance with substantially well known patterns.

Some authors consider that polarization is mainly concentrated on the C-Cl bond, thereby ionic dissociation takes place first, followed by proton dissociation.

That mechanism is generally preferred where the catalytic agent is the chloride of a metal such as zinc, cadmium, etc.

It should be further appreciated that PVC transformation processes are never carried out in a completely oxygen-free environment. Besides those instances where the polymer is at all times exposed to air, even with processes providing no contact with the atmosphere, there remains to be considered the oxygen picked up by the resin.

Consequently, at least during the initial stage of the process, one can talk of thermal-oxidative degradation.

The term "degradation", as applied to PVC articles of manufacture, refers to deterioration processes which imply no chemical alterations in the resin macromolecules.

On the one side, there are the physical modifications of the articles of manufacture induced by shifted or even lost components, which results in lack of homogeneity and altered compositions and affects the physical and mechanical properties of the articles.

On the other side, there are the chemical alterations, which mainly or solely concern the additives, not the polymer.

One example comes from the biodegradation of plasticizers, lubricants, and some other additives.

All of the foregoing types of degradation result in essence, as a visible reaction during the PVC transformation processes (such as rotational molding, slush molding, plasticization on a fluidized bed, spraying -- inclusing electrostatic spraying, and sintering), in a significant emission of fumes and discoloration of the compound original color.

It is an object of this invention to obviate such prior disadvantages by providing a plasticized and/or non-plasticized, toxic and/or non-toxic PVC compound, which in the course of its transformation processes, can virtually release no fumes, whether corrosive or otherwise.

This object, as well as other practical ones which will be apparent hereinafter, are achieved by a PVC compound, according to the invention, which
includes all PVC types and all the additives required
for the practical utilization of the compound in
standard applications, as specified in the following
Table.

|  | % | Classes | Industrial examples |
|---|---|---|---|
| PVC | 1-99 | Emulsion, suspension, mass | Solvic 364 MB Ravinil S70 F Lucovil RB 8010 |
| Plasticizers | 0-99 | monomeric (DOP/ DLP11/DINP); polymeric; fat acid esters; epoxies | Linevol 911 Unem 9506 DBS — DOA Estabe x 2307 |
| Stabilizers | 1-40 | Natural oils, Sn derivatives, Pb derivatives, Ca, Zn, Cd, Ba derivatives | Advastab T22N DIPHOS, PROSPER 460 |
| Lubricants | 0-10 | Waxes, silicones, PE, PP | Wax A, wax E |
| Processing aids | | Functional resins | Moda flow, MBS Paraloid K 120 N |
| Inorganic pigments | | Titanium dioxide, carbon black, Cr, Sb, Mo derivatives | Cronos CL220 Monark 700 Molybdate red |
| Organic pigments | 0-10 | Compatible with PVC | Cromoftal G, phtalocyanine blue and green |
| Fillers | 0-99 | Organic and inorganic amorphous on PVC | Talk, Atomform, baryta |
| Polymers | 0-99 | Compatible with PVC | CPE, PE, EAA, Polibond |
| Cross-linking agents | 0-10 | Polyfunctional amines, resulting acids and anhydrides | Triethylenetetramine, dichloromaleic anhydride |

This PVC compound is characterized in that said PVC and additives are selected, either alone or together, from substances featuring low fume emission rates in the course of a high temperature stability test, or more specifically, from substances having volatility and thermal stability as set forth in the following Table, where "BPM" stands for "low molecular weight":

| Components | Volatility | Thermal stability |
|---|---|---|
| PVC | 0.1% water | High owing to its purity |
| Plasticizers | 0.1% BPM | High without coloring |
| Stabilizer | 0.1% BPM | High without coloring |
| Polymer processing | 0.1% BPM water | Without coloring |
| Lubricants | 0.1% BPM | Without coloring |
| Organic pigments | 0.01% BPM water | Stable |
| Inorganic pigments | 1% water | Stable |
| Fillers | 1% water | Stable |
| Cross-linking agents, antioxidants | 0.1% water BPM | Stable |

In particular, plasticizers are intended to include: polymerics with varying length molecules formed from condensation, reaction of dibasic acids with mono- and polyvalent alcohols; e.g., polybutylene adipate;

- epoxies - epoxidized linseed oil, epoxidized soyabean oils, N.alkyleneepoxystearate, I.alkyleneepoxystearate, cycloalkyleneepoxystearate;

- natural and treated oils, linseed oil, mixed seed oils, corn oil, etc.;

- linears - esters of such aromatic acids as phtalate and terephtalate, of linear alcohol, linear type 911;

- phosphatate - organic esters of phosphoric acid, type TTP, TCP, TXP, etc.;

- trimellitate - organic esters of trimellitic acid;

- fat acid esters - organic esters of sebacic, azelaic, adipic acids;

- monomerics - esters of mono-di-tri-carboxylic acids (DIDP, DIOP, etc.);

- PVC compatible polymers having a plasticizing effect.

Merely for illustration purposes, one example of non-toxic compounds according to this invention is set forth in the following Table, where "PCR" stands for "parts per 100 resin":

| Components | PCR | Processing technologies |
|---|---|---|
| Resin suspension K48-70 | 0-100 | |
| Resin mass K50-70 | 0-100 | |
| Resin emulsion K60-80 | 0-100 | |
| Resin copolymer K40-70 | 0-100 | |
| Polymeric plasticizer | 0-60 | |
| Monomeric plasticizer | 0-10 | |
| Epoxy plasticizer | 0-60 | extrusion |
| Pretreated natural oils | 0-10 | |
| Linear plasticizer | 0-50 | |
| Phosphatate plasticizer | 0-10 | |
| Trimellitic plasticizer | 0-40 | molding |
| Non-metallic stabilizer | 1-10 | |
| Ca Zn stabilizer | 1-10 | co-extrusion |
| Sn metal stabilizers | 1-2 | |
| $CaCO_3$ fillers | 0-300 | rotational |
| Baryta fillers | 0-300 | calendering |
| Talc fillers | 0-300 | fluidized bed |
| Organic/inorganic fillers | 0-100 | slush molding |
| Lubricants | 0-10 | volatility 1% at 300ºC, over 1 minute 30 seconds |
| Processing aid | 0-20 | |
| CPE polymer | 0-100 | |
| EAA polymer | 0-100 | |
| PE polymer | 0-100 | |
| Nitrile elastomers | 0-100 | |
| Compatible polymers | 0-100 | |
| Cross-linking agents and antioxidants | 0-5 | |

Another example, relating to the preparation of generic compounds, is given in the following Table:

| Components | PCR | Processing technologies |
|---|---|---|
| Resin suspension K48-70 | 0-100 | |
| Resin mass K50-70 | 0-100 | |
| Resin emulsion K60-80 | 0-100 | |
| Resin copolymer K40-70 | 0-100 | |
| Polymeric plasticizer | 0-60 | |
| Monomeric plasticizer | 0-10 | |
| Epoxy plasticizer | 0-40 | extrusion |
| Pretreated natural oils | 0-10 | |
| Linear plasticizer | 0-50 | |
| Phosphate plasticizer | 0-10 | |
| Trimellitic plasticizer | 0-40 | molding |
| Ba,Cd stabilizer | 0-10 | co-extrusion |
| Sn stabilizer | 0-10 | |
| Ti or Sn stabilizer | 0-10 | |
| Pb stabilizer | 0-10 | |
| Ba,Zn stabilizer | 0-10 | |
| $CaCO_3$ fillers | 0-300 | rotational |
| Baryta fillers | 0-300 | calendering |
| Talc fillers | 0-300 | fluidized bed |
| Organic/inorganic fillers | 0-100 | slush molding |
| Lubricants | 0-10 | volatility 1% at 300°C, over 1 minute 30 seconds |
| Processing aid | 0-20 | |
| CPE polymer | 0-100 | |
| EAA polymer | 0-100 | |
| PE polymer | 0-100 | |
| Nitrile elastomers | 0-100 | |
| Compatible polymers | 0-100 | |
| Cross-linking agents and antioxidants | 0-5 | |

The foregoing compounds have shown in practice, during the various static and dynamic stability tests, an emission of non-corrosive fumes in the 0.1% to 1% range on compound.

Determination of the loss has been carried out on a by weight basis, by weighing the product before and after the test.

0116813

The presence of corrosive gases has been
determined by flowing the fumes through a solution of
$AgNO_3$, while taking into account the presence of strong
acids, such as HCl, which would have resulted in
AgCl precipitation.

In particular, all of the examples have ruled out
the presence of corrosivity, originating no AgCl
precipitate. Standard compounds, in the same conditions,
had a loss of weight ranging from 4% to 10%.

It will be appreciated from the foregoing
description that the invention fully achieves its
objects.

Moreover, any modifications and changes within
the capability of a skilled person in the art may be
introduced in the above-related examples without
departing from scope of the inventive concepts outlined
hereinabove.

0116813

## CLAIMS

1. A plasticized and/or non-plasticized, non-toxic and/or toxic PVC compound with no emissions of corrosive and/or non-corrosive fumes in the course of transformation processes, characterized in that the components thereof are selected from substances featuring low fume emission rates in the course of a high temperature test, or more specifically, from substances having volatility and thermal stability as set forth in the following Table (where "BPM" means "low molecular weight"):

| Components | Volatility | Thermal stability |
|---|---|---|
| PVC | 0.1% water | High owing to its purity |
| Plasticizers | 0.1% BPM | High without coloring |
| Stabilizer | 0.1% BPM | High without coloring |
| Polymer processing | 0.1% BPM water | Without coloring |
| Lubricants | 0.1% BPM | Without coloring |
| Organic pigments | 0.01% BPM water | Stable |
| Inorganic pigments | 1% water | Stable |
| Fillers | 1% water | Stable |
| Cross-linking agents, antioxidants | 0.1% water BPM | Stable |

2. A stabilized PVC compound according to Claim 1, characterized in that it exhibits plasticization from 0.1 to 100 total PCR, as obtained with one or more plasticizers selected from polymerics, epoxies, natural and treated oils, linears, phosphatates, trimellitate, esters of fat acids, monomerics.

3. A PVC compound according to the preceding claims, characterized in that it comprises stabilizers from 0 to 10 PCR, said stabilizers comprising natural or treated oils or carbohydrates and/or derivatives
of Ca Zn, Sn, Ba, Cd, Tio Sn, Pb, Ba Zn.

4. A PVC compound according to the preceding
claims, characterized in that it comprises fillers
from 0 to 300 PCR, said fillers including $CaCO_3$, talc,
baryta, organic matter.

5. A PVC compound according to the preceding
claims, characterized in that it comprises polymers
from 0 to 100 PCR, said polymers including CPE, EAA,
PE.

6. A PVC compound according to the preceding
claims, characterized in that it comprises processing
aids from 0 to 20 PCR.

7. A PVC compound according to the preceding
claims, characterized in that it comprises pigments
and lubricants from 0 to 10 PCR, and cross-linking
agents and antioxidants from 0 to 5 PCR.

8. A PVC compound according to the preceding
claims, characterized in that it drastically cuts down
the generation of corrosive and non-corrosive fumes
in a visible and weighable way, the whole substantially
as described hereinabove for the objects specified.

European Patent
Office

**EUROPEAN SEARCH REPORT**

Application number

EP 83 83 0142

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 377 433 (THE GENERAL TIRE & RUBBER CO.) <br> * Claims 1,3; page 1, lines 28-35; page 2, lines 3-12; example 1 * | 1 | C 08 L 27/06 |
| A | FR-A-2 381 084 (GOODRICH) <br> * Claim 1 * | 1 | |
| A | US-A-4 053 451 (KROENKE) <br> * Claim 1 * | 1 | |

TECHNICAL FIELDS
SEARCHED (Int. Cl. ³)

C 08 L

The present search report has been drawn up for all claims

| Place of search | Date of completion of the search | Examiner |
|---|---|---|
| THE HAGUE | 16-05-1984 | BOLETTI C.M. |